# EUROPEAN PATENT APPLICATION

(11) **EP 4 801 084 A1**
(43) Date of publication of application: **02.09.2026**
(21) Application number: 24887804.3
(22) Date of filing: 28.10.2024
(51) Int. Cl.: H04W 8/24

(54) **METHOD FOR DEPLOYING ARTIFICIAL INTELLIGENCE MODEL, AND APPARATUS**

(30) Priority: 09.11.2023 CN 202311498332
(71) Applicant: Huawei Technologies Co., Ltd., Shenzhen, Guangdong 518129 (CN)
(72) Inventor: WANG, Junfan, Shenzhen, Guangdong 518129 (CN); YAN, Xueqiang, Shenzhen, Guangdong 518129 (CN); XI, Yan, Shenzhen, Guangdong 518129 (CN); YE, Wenxuan, Shenzhen, Guangdong 518129 (CN); ZHAO, Mingyu, Shenzhen, Guangdong 518129 (CN)
(74) Representative: Körber, Martin Hans
(86) International application number: PCT/CN2024/127902
(87) International publication number: WO 2025/098191

(57) **Abstract**

This application discloses an AI model deployment method and an apparatus. The method includes: A first access network apparatus receives a first request from a terminal, where the first request includes an identifier of a first AI model; the first access network apparatus determines the first AI model, where the first AI model is one of at least one AI model cached by the first access network apparatus or a second access network apparatus, and the second access network apparatus is adjacent to the first access network apparatus; and the first access network apparatus sends the first AI model to the terminal. **In** embodiments of this application, by caching an AI model **in** an access network apparatus, transmission of the AI model can be implemented independently of a PDU session mechanism, thereby achieving effects such as protecting user privacy, reducing network resource occupation, and improving model deployment efficiency.

## Description

### CROSS-REFERENCE TO RELATED APPLICATIONS

This application claims priority to Chinese Patent Application No. 202311498332.2, filed with the China National Intellectual Property Administration on November 9, 2023 and entitled "ARTIFICIAL INTELLIGENCE MODEL DEPLOYMENT METHOD AND APPARATUS", which is incorporated herein by reference in its entirety.

### TECHNICAL FIELD

This application relates to the field of communication technologies, and in particular, to an artificial intelligence (artificial intelligence, AI) model deployment method and an apparatus.

### BACKGROUND

With the advancement of AI technologies, an increasing number of enterprises are providing services for terminals by using AI models. Currently, a terminal uses an AI model in the following two modes:
(1) Online mode: A terminal accesses an AI model deployed in a data network (data network, DN) by invoking its application programming interface (application programming interface, API) via a protocol data unit (protocol data unit, PDU) session. However, this mode poses risks of user privacy leakage, and the AI model becomes unavailable when a user is offline, resulting in a poor experience.
(2) Offline mode: A terminal downloads an AI model from the DN to a local device for local deployment via a PDU session and directly accesses the AI model locally. Although this mode ensures that a user can use the AI model offline and reduces the risk of privacy leakage, due to the excessively large data volume of the AI model, the terminal needs to occupy a large amount of network resources when downloading the AI model.

In addition, both modes depend on the PDU session mechanism for transmitting data of the AI model. Therefore, an operator's network merely provides access and connection services for terminals and AI model providers, performing transparent transmission of AI model data, which results in low data transmission efficiency.

Therefore, how to deploy an AI model to protect user privacy, reduce network resource occupation, and improve AI model deployment efficiency is a technical problem to be resolved in this application.

### SUMMARY

This application provides an AI model deployment method and an apparatus to achieve technical effects of protecting user privacy, reducing network resource occupation, and improving AI model deployment efficiency.

According to a first aspect, an AI model deployment method is provided. The method may be applied to an access network apparatus. The access network apparatus may be an access network device or a chip in the access network device. The method includes: A first access network apparatus receives a first request from a terminal, where the first request includes an identifier of a first AI model; the first access network apparatus determines the first AI model, where the first AI model is one of at least one AI model cached by the first access network apparatus or a second access network apparatus, and the second access network apparatus is adjacent to the first access network apparatus; and the first access network apparatus sends the first AI model to the terminal.

In this embodiment of this application, an access network apparatus (for example, the first access network apparatus or the second access network apparatus) has a function of caching an AI model. After receiving the first request of the terminal, the first access network apparatus may send, to the terminal, the AI model cached by the first access network apparatus or an adjacent access network apparatus (for example, the second access network apparatus). In this embodiment of this application, the AI model can be transmitted independently of a PDU session mechanism. The terminal does not need to access an API of the AI model in a DN by using the PDU session mechanism, but downloads the AI model locally for use, thereby protecting user privacy. The terminal also does not need to download the AI model from the DN by using the PDU session mechanism, thereby reducing occupation of network resources (for example, network load and bandwidth). In addition, the AI model may be cached in the access network apparatus, and a transmission path of the AI model is short, thereby improving AI model transmission efficiency and model deployment efficiency. It can be learned that this embodiment of this application can protect user privacy, reduce network resource occupation, and improve AI model deployment efficiency.

In a possible design, the first AI model cached by the first access network apparatus may be from another adjacent access network apparatus, or may be from a core network element. This is not limited. For example, the first access network apparatus may obtain the first AI model from the second access network apparatus, and store the first AI model into a cache of the first access network apparatus; or the first access network apparatus may receive the first AI model from a first data processing function network element, and store the first AI model into a cache of the first access network apparatus.

In a possible design, the first request may be a request sent to the first access network apparatus. For example, the first request may be carried in a signaling radio bearer (signaling radio bearer, SRB). Certainly, the signaling radio bearer is merely a possible implementation, and the terminal may send the first request to the first access network apparatus in other manners.

In this way, the terminal can request the first AI model from the access network.

In a possible design, that the first access network apparatus determines the first AI model includes: The first access network apparatus queries, based on the first request, whether the first AI model is in the cache of the first access network apparatus. If the first AI model is in the cache of the first access network apparatus, the first access network apparatus sends, to the terminal, the first AI model cached by the first access network apparatus.

In this way, when the first AI model is in the cache of the first access network apparatus, the first access network apparatus preferentially returns, to the terminal, the first AI model cached by the first access network apparatus, to minimize a transmission path, and improve model deployment efficiency.

In a possible design, if the first AI model is not in the cache of the first access network apparatus, the first access network apparatus may query the second access network apparatus for the first AI model, and the first access network apparatus receives the first AI model sent by the second access network apparatus.

In this way, when the first AI model is cached by an adjacent access network apparatus, the first access network apparatus may obtain the first AI model from the adjacent access network apparatus and then return the first AI model to the terminal, without obtaining the first AI model from the core network, to shorten a transmission path and improve model deployment efficiency.

In a possible design, after the first access network apparatus receives the first AI model sent by the second access network apparatus, the first access network apparatus may further store the first AI model into the cache of the first access network apparatus.

In this way, when receiving a request for the first AI model next time, the first access network apparatus may send, to the terminal, the first AI model cached by the first access network apparatus, to improve model deployment efficiency.

In a possible design, the first request may be a request sent to an application function. For example, the first request is carried in a data radio bearer (data radio bearer, DRB). Correspondingly, after receiving the first request, the first access network apparatus may forward the first request to the application function network element. Then, the first access network apparatus may receive the first AI model from a first data processing function network element, and may further store the first AI model into a cache of the first access network apparatus.

In this way, the first access network apparatus device may receive the first AI model from the core network (for example, a data processing function network element). This manner may be independent of a PDU session mechanism and can reduce network resource occupation. In addition, after receiving the first AI model, the first access network apparatus device may cache the first AI model. In this way, when receiving a request for the first AI model next time, the first access network apparatus may send, to the terminal, the first AI model cached by the first access network apparatus, to improve model deployment efficiency.

In a possible design, after the first access network apparatus receives the first request from the terminal, the first access network apparatus may further send a first duration to the terminal, where the first duration is a duration in which the terminal waits for the first AI model to start transmission.

Because an amount of data of an AI model is generally large, specific transmission time is required. The first access network apparatus indicates a waiting duration to the terminal, to avoid a problem of low model deployment efficiency caused by the terminal waiting indefinitely when a network does not have the first AI model, and avoid a problem that when the network has the first AI model, the terminal mistakenly considers that the model fails to be deployed and frequently sends a request to the network.

In a possible design, the first access network apparatus may further receive update information from the first data processing function network element, where the update information is used for updating the first AI model.

In this way, the AI model cached by the access network apparatus can be updated, to improve user experience.

According to a second aspect, an AI model deployment method is provided. The method may be applied to a terminal, and the terminal may be a terminal device or a chip or an apparatus in the terminal device. The method includes: The terminal sends a first request to a first access network apparatus, where the first request includes an identifier of a first AI model; and the terminal receives the first AI model from the first access network apparatus, where the first AI model is one of at least one AI model cached by the first access network apparatus or a second access network apparatus, and the second access network apparatus is adjacent to the first access network apparatus.

In this embodiment of this application, the terminal may obtain an AI model from an access network apparatus (for example, the first access network apparatus or the second access network apparatus), so that the AI model can be transmitted independently of a PDU session mechanism. The terminal does not need to access an API of the AI model in a DN by using the PDU session mechanism, but downloads the AI model locally for use, thereby protecting user privacy. The terminal also does not need to download the AI model from the DN by using the PDU session mechanism, thereby reducing occupation of network resources (for example, network load and bandwidth). In addition, the AI model may be cached in the access network apparatus, and a transmission path of the AI model is short, thereby improving AI model transmission efficiency and model deployment efficiency.

In a possible design, the first request may be a request sent to the first access network apparatus. For example, the first request may be carried in a signaling radio bearer. Certainly, the signaling radio bearer is merely a possible implementation, and the terminal may send the first request to the first access network apparatus in other manners.

In this way, the first AI model may be obtained from the access network.

In a possible design, the first request may be a request sent to an AF. For example, the first request is carried in a data radio bearer.

In this way, the first AI model may be obtained from the core network.

In a possible design, after the terminal sends the first request to the first access network apparatus, and before the terminal receives the first AI model from the first access network apparatus, the method further includes: If a waiting duration of the terminal exceeds a preset duration, or the terminal receives, from the first access network apparatus, information indicating that the first AI model fails to be deployed, the terminal sends a second request to an application function network element via the first access network apparatus, where the second request includes the identifier of the first AI model, and the second request is carried in a data radio bearer.

In this way, the terminal first attempts to obtain the AI model from the access network, and then obtains the AI model from the core network after the attempt fails. This can ensure that the terminal obtains the AI model, to improve reliability of the solution.

In a possible design, after the terminal sends the first request to the first access network apparatus, and before the terminal receives the first AI model from the first access network apparatus, the method further includes: The terminal receives a first duration from the first access network apparatus; and the terminal waits, within the first duration, for the first AI model to start transmission.

In this way, the terminal may wait for the first AI model within the duration indicated by the first access network apparatus, to avoid a problem of low model deployment efficiency caused by the terminal waiting indefinitely when a network does not have the first AI model, and avoid a problem that the terminal frequently sends a request to the network when the network has the first AI model.

In a possible design, the preset duration is a second duration, and the second duration is a duration of a timer configured by the terminal.

In this way, the terminal waits for the first AI model within the duration of the timer, to avoid a problem of low model deployment efficiency caused by the terminal waiting indefinitely when a network does not have the first AI model, and avoid a problem that the terminal frequently sends a request to the network when the network has the first AI model.

According to a third aspect, an AI model deployment method is provided. The method may be applied to a data processing function network element or a chip in the data processing function network element. For example, the method is applied to a first data processing function network element. The method includes: The first data processing function network element receives first configuration information from a control function network element, where the first configuration information includes an identifier of a first access network apparatus; the first data processing function network element receives a first AI model from a first data storage function network element; and the first data processing function network element sends the first AI model to the first access network apparatus based on the identifier of the first access network apparatus.

In this embodiment of this application, the first data processing function network element may transmit the first AI model to the first access network apparatus based on a configuration of the control function network element, so that the first access network apparatus caches the AI model and delivers the AI model to the terminal. In this solution, the AI model may be deployed independently of a PDU session mechanism, thereby achieving effects of protecting user privacy and reducing network resource occupation.

In a possible design, the first configuration information further includes a transmission protocol. The transmission protocol is related to a first data pipeline, and the first data pipeline is a data pipeline between the first data storage function network element and the first data processing function network element; or the transmission protocol is related to a first data pipeline identifier, and the first data pipeline identifier indicates a data pipeline between the first data storage function network element and the first data processing function network element. Correspondingly, that the first data processing function network element receives the first AI model from the first data storage function network element includes: The first data processing function network element receives the first AI model from the first data storage function network element according to the transmission protocol.

In this way, the control function network element can flexibly configure the transmission protocol between the first data storage function network element and the first data processing function network element based on a type of data to be transmitted between the first data storage function network element and the first data processing function network element, to improve transmission efficiency of data (for example, an AI model) between the first data storage function network element and the first data processing function network element.

In a possible design, after sending the first AI model to the first access network apparatus, the first data processing function network element may further send the identifier of the first access network apparatus and an identifier of the first AI model to the control function network element.

In this way, the control function network element updates model cache information of the first access network apparatus, and better controls and manages the AI model cached by the first access network apparatus.

In a possible design, the first data processing function network element may further receive update information from the first data storage function network element, where the update information is used for updating the first AI model; and the first data processing function network element sends the update information to the first access network apparatus.

In this way, the first data processing function network element may assist the first data storage function network element in sending the update information to the first access network apparatus, to update the AI model cached by the access network apparatus, and improve user experience.

According to a fourth aspect, an AI model deployment method is provided. The method may be applied to a data storage function network element or a chip in the data storage function network element. For example, the method is applied to a first data storage function network element. The method includes: The first data storage function network element receives second configuration information from a control function network element, where the second configuration information includes an identifier of a first data processing function network element and an identifier of a first AI model; and the first data storage function network element sends the first AI model to the first data processing function network element.

In this embodiment of this application, the first data storage function network element may transmit the first AI model to the first data processing function network element based on a configuration of the control function network element, so that the data processing function network element sends the first AI model to the access network apparatus. In this solution, the AI model may be deployed independently of a PDU session mechanism, thereby achieving effects of protecting user privacy and reducing network resource occupation.

In a possible design, the second configuration information further includes a transmission protocol. The transmission protocol is related to a first data pipeline, and the first data pipeline is a data pipeline between the first data storage function network element and the first data processing function network element; or the transmission protocol is related to a first data pipeline identifier, and the first data pipeline identifier indicates a data pipeline between the first data storage function network element and the first data processing function network element. Correspondingly, that the first data storage function network element sends the first AI model to the first data processing function network element includes: The first data storage function network element sends the first AI model to the first data processing function network element according to the transmission protocol.

In this way, data transmission efficiency of the first AI model between the first data storage function network element and the first data processing function network element can be improved.

In a possible design, the first data storage function network element may further receive subscription information from the control function network element, where the subscription information includes the identifier of the first AI model; and when the first AI model stored in the first data storage function network element is updated, the first data storage function network element sends notification information to the control function network element based on the subscription information, where the notification information indicates that the first AI model is updated.

In this way, when the first AI model stored in the first data storage function network element is updated, the first data storage function network element may notify the control function network element in a timely manner, so that the control function network element controls, in a timely manner, update of the first AI model cached by an access network apparatus.

In a possible design, the first data storage function network element may further send update information to the first data processing function network element, where the update information is used for updating the first AI model.

In this way, the AI model cached by the access network apparatus can be updated, to improve user experience.

According to a fifth aspect, an AI model deployment method is provided. The method may be applied to a control function network element or a chip in the control function network element. For example, the method is applied to the control function network element. The method includes: The control function network element receives a third request from an application function network element or a user plane network element, where the third request includes an identifier of a first AI model; the control function network element determines a first data storage function network element and a first data processing function network element based on the third request; and the control function network element sends first configuration information to the first data processing function network element and second configuration information to the first data storage function network element, where the first configuration information includes an identifier of a first access network apparatus, and the second configuration information includes an identifier of the first data processing function network element and the identifier of the first AI model.

In this embodiment of this application, the control function network element may configure the first data processing function network element and the first data storage function network element to transmit the first AI model to the first access network apparatus. In this solution, the AI model may be deployed independently of a PDU session mechanism, thereby achieving effects of protecting user privacy and reducing network resource occupation.

In a possible design, the first configuration information and the second configuration information further include a transmission protocol. The transmission protocol is related to a first data pipeline, and the first data pipeline is a data pipeline between the first data storage function network element and the first data processing function network element; or the transmission protocol is related to a first data pipeline identifier, and the first data pipeline identifier indicates a data pipeline between the first data storage function network element and the first data processing function network element.

In this way, data transmission efficiency of the first AI model between the first data storage function network element and the first data processing function network element can be improved.

In a possible design, a data packet in which the second request is located carries address information of a terminal. The control function network element may further query, from the user plane function network element based on the address information of the terminal, an identifier of an access network apparatus corresponding to the terminal, to obtain the identifier of the first access network apparatus.

In this way, the first AI model can be sent to an access network apparatus (that is, the first access network apparatus) that provides a service for the terminal, to ensure transmission reliability of the AI model.

In a possible design, the control function network element may further receive the identifier of the first access network apparatus and the identifier of the first AI model from the first data processing function network element, and update model cache information based on the identifier of the first access network apparatus and the identifier of the first AI model, where the model cache information includes information about an AI model cached in at least one access network apparatus.

In this way, the control function network element may update the model cache information of the first access network apparatus, and better controls and manages the AI model cached by the first access network apparatus.

In a possible design, the control function network element may further send subscription information to the first data storage function network element, where the subscription information includes the identifier of the first AI model; the control function network element receives notification information from the first data storage function network element, where the notification information indicates that the first AI model is updated; and the control function network element configures, based on the model cache information, the first data storage function network element and the first data processing function network element to send update information to the first access network apparatus, where the update information is used for updating the first AI model.

In this way, when the first AI model is updated, the control function network element may update, in a timely manner, the first AI model cached by the access network apparatus, to improve user experience.

According to a sixth aspect, an AI model deployment method is provided. The method includes: A control function network element receives a third request from an application function network element or a user plane network element, where the third request includes an identifier of a first AI model; the control function network element determines a first data storage function network element and a first data processing function network element based on the third request; the control function network element sends first configuration information to the first data processing function network element and second configuration information to the first data storage function network element, where the first configuration information includes an identifier of a first access network apparatus, and the second configuration information includes an identifier of the first data processing function network element and the identifier of the first AI model; the first data storage function network element receives the second configuration information from the control function network element, and sends the first AI model to the first data processing function network element; and the first data processing function network element receives the first configuration information from the control function network element, receives the first AI model from the first data storage function network element, and sends the first AI model to the first access network apparatus based on the identifier of the first access network apparatus.

According to a seventh aspect, a communication apparatus is provided. The apparatus includes a module, a unit, or a technical means configured to perform the method according to any one of the first aspect or the possible designs of the first aspect.

For example, the apparatus may include:
a transceiver module, configured to receive a first request from a terminal, where the first request includes an identifier of a first AI model; and
a processing module, configured to determine the first AI model, where the first AI model is one of at least one AI model cached by a first access network apparatus or a second access network apparatus, and the second access network apparatus is adjacent to the first access network apparatus.

The transceiver module is further configured to send the first AI model to the terminal.

According to an eighth aspect, a communication apparatus is provided. The apparatus includes a module, a unit, or a technical means configured to perform the method according to any one of the second aspect or the possible designs of the second aspect.

For example, the apparatus may include:
a transceiver module, configured to: send a first request to a first access network apparatus, where the first request includes an identifier of a first AI model; and receive the first AI model from the first access network apparatus, where the first AI model is one of at least one AI model cached by the first access network apparatus or a second access network apparatus, and the second access network apparatus is adjacent to the first access network apparatus.

According to a ninth aspect, a communication apparatus is provided. The apparatus includes a module, a unit, or a technical means configured to perform the method according to any one of the third aspect or the possible designs of the third aspect.

For example, the apparatus may include:
a transceiver module, configured to: receive first configuration information from a control function network element, where the first configuration information includes an identifier of a first access network apparatus; and receive a first AI model from a first data storage function network element; and
a processing module, configured to send the first AI model to the first access network apparatus based on the identifier of the first access network apparatus.

According to a tenth aspect, a communication apparatus is provided. The apparatus includes a module, a unit, or a technical means configured to perform the method according to any one of the fourth aspect or the possible designs of the fourth aspect.

For example, the apparatus may include:
a transceiver module, configured to: receive second configuration information from a control function network element, where the second configuration information includes an identifier of a first data processing function network element and an identifier of a first AI model; and send the first AI model to the first data processing function network element.

According to an eleventh aspect, a communication apparatus is provided. The apparatus includes a module, a unit, or a technical means configured to perform the method according to any one of the fifth aspect or the possible designs of the fifth aspect.

For example, the apparatus may include:
a transceiver module, configured to receive a third request from an application function network element or a user plane network element, where the third request includes an identifier of a first AI model; and
a processing module, configured to determine a first data storage function network element and a first data processing function network element based on the third request.

The transceiver module is further configured to send first configuration information to the first data processing function network element and send second configuration information to the first data storage function network element, where the first configuration information includes an identifier of a first access network apparatus, and the second configuration information includes an identifier of the first data processing function network element and the identifier of the first AI model.

According to a twelfth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, by using a logic circuit or executing instructions, the method according to the first aspect or any one of the possible designs of the first aspect, or the second aspect or any one of the possible designs of the second aspect, or the third aspect or any one of the possible designs of the third aspect, or the fourth aspect or any one of the possible designs of the fourth aspect, or the fifth aspect or any one of the possible designs of the fifth aspect.

In a possible design, the communication apparatus further includes a memory, configured to store the instructions. Optionally, the memory is integrated with the processor.

According to a thirteenth aspect, a computer-readable storage medium is provided. The storage medium stores a computer program or instructions. When the computer program or the instructions are executed by a processor, the method according to the first aspect or any one of the possible designs of the first aspect, or the second aspect or any one of the possible designs of the second aspect, or the third aspect or any one of the possible designs of the third aspect, or the fourth aspect or any one of the possible designs of the fourth aspect, or the fifth aspect or any one of the possible designs of the fifth aspect is implemented.

According to a fourteenth aspect, a computer program product is provided, including a computer program or instructions. When the computer program or the instructions are executed by a processor, the method according to the first aspect or any one of the possible designs of the first aspect, or the second aspect or any one of the possible designs of the second aspect, or the third aspect or any one of the possible designs of the third aspect, or the fourth aspect or any one of the possible designs of the fourth aspect, or the fifth aspect or any one of the possible designs of the fifth aspect is implemented.

According to a fifteenth aspect, a communication system is provided, including the communication apparatus according to the seventh aspect to the eleventh aspect, or including the communication apparatus according to the twelfth aspect.

For beneficial effects of the sixth aspect to the fifteenth aspect, refer to beneficial effects of corresponding designs in the first aspect to the fifth aspect. Details are not described again.

### BRIEF DESCRIPTION OF DRAWINGS

FIG. 1 is a diagram of a possible communication system according to an embodiment of this application;
FIG. 2 is a diagram of another possible communication system according to an embodiment of this application;
FIG. 3 is a flowchart of an AI model deployment method according to an embodiment of this application;
FIG. 4 is a flowchart in which a terminal obtains an identifier of a first AI model;
FIG. 5 is a flowchart in which a first access network apparatus obtains a first AI model from a second access network apparatus;
FIG. 6 is a flowchart in which a terminal obtains a first AI model from a core network;
FIG. 7 is a flowchart in which a first access network apparatus obtains a first AI model from a core network;
FIG. 8 is a flowchart in which a terminal obtains a first AI model from a core network;
FIG. 9 is a flowchart of a method for updating an AI model according to an embodiment of this application;
FIG. 10 is a diagram of a communication apparatus 1000 according to an embodiment of this application; and
FIG. 11 is a diagram of another communication apparatus 1100 according to an embodiment of this application.

### DESCRIPTION OF EMBODIMENTS

The following describes in detail embodiments of this application with reference to accompanying drawings.

The technical solutions in embodiments of this application may be applied to various communication systems, for example, a long-term evolution (long-term evolution, LTE) system, an LTE-advanced (LTE-advanced, LTE-A) system, a universal mobile telecommunications system (universal mobile telecommunications system, UMTS), a 5th generation (5th generation, 5G) mobile communication system, a beyond 5G (beyond 5G, B5G) mobile communication system, and a communication system evolved after 5G like a 6th generation (6th generation, 6G) mobile communication system. The communication system may alternatively be a device-to-device (device-to-device, D2D) network, a Wi-Fi network, a machine to machine (machine to machine, M2M) network, an internet of things (internet of things, IoT) network, or another network.

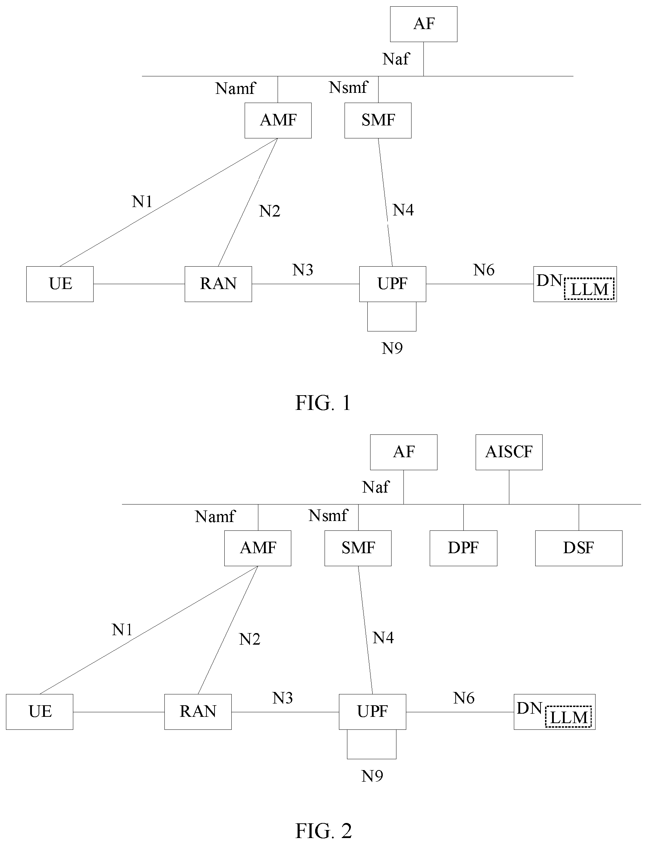

FIG. 1 is a diagram of a possible communication system according to an embodiment of this application. Network functions and entities included in the system mainly include: user equipment (user equipment, UE), a radio access network ((radio) access network, (R)AN), a user plane function (user plane function, UPF), a data network (Data Network, DN), an access and mobility management function (access and mobility management function, AMF), a session management function (session management function, SMF), an application function (application function, AF), and the like.

The user equipment may alternately be referred to as a terminal device, a terminal, a mobile station, a mobile terminal, or the like. The following uses a terminal as an example for description.

The terminal may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearables, smart transportation, a smart city, or the like. The terminal may be a mobile phone, a tablet computer, a notebook computer, a palmtop computer, a mobile internet device (mobile internet device, MID), a wearable device (for example, a smart watch, a smart band, a pedometer, or smart glasses), an in-vehicle device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in autonomous driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be a vehicle apparatus, for example, an entire vehicle apparatus, an in-vehicle module, an in-vehicle chip, an on-board unit (on-board unit, OBU), or an internet of things terminal box (telematics box, T-BOX). The terminal device may alternatively be another device having a terminal function. For example, the terminal device may be a device that has a terminal function in D2D communication. A specific technology and a specific device form that are used by the terminal are not limited in embodiments of this application.

The (R)AN may alternately be referred to as a radio access network apparatus, an access network apparatus, an access network device, a radio access network device, an access network node, an access network element, or the like. The following uses an access network apparatus as an example for description.

The access network apparatus is configured to help a terminal implement radio access. A plurality of access network apparatuses in a communication system may be nodes of a same type, or may be nodes of different types. In some scenarios, roles of the access network apparatus and the terminal are relative. For example, a helicopter or an uncrewed aerial vehicle is configured as a mobile base station. For terminals that access a network by using the helicopter or the uncrewed aerial vehicle, the helicopter or the uncrewed aerial vehicle is the access network apparatus. However, for a base station to which the helicopter or the uncrewed aerial vehicle accesses, the helicopter or the uncrewed aerial vehicle is the terminal. The access network apparatus and the terminal are sometimes referred to as communication apparatuses.

In a possible scenario, the access network apparatus may be a base station (base station), an evolved base station (evolved NodeB, eNodeB), a transmission reception point (transmission reception point, TRP), a transmission point (transmission point, TP), a next-generation NodeB (next-generation NodeB, gNB), a next-generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, an access network apparatus that is in a non-terrestrial network (non-terrestrial network, NTN) communication system of a mobile switching center and that may be deployed on a high-altitude platform or a satellite, or the like. The access network apparatus may be a macro base station, a micro base station, an indoor base station, a relay node or a donor node, or a radio controller in a CRAN scenario. The access network apparatus may alternatively be a device with a base station function in device-to-device (device-to-device, D2D) communication, internet of vehicles communication, uncrewed aerial vehicle communication, or machine communication. Optionally, the access network apparatus may alternatively be a server, a wearable device, a vehicle, an in-vehicle device, or the like. For example, an access network device in a vehicle to everything (vehicle to everything, V2X) technology may be a road side unit (road side unit, RSU).

In another possible scenario, a plurality of access network apparatuses collaborate to assist the terminal in implementing radio access, and different access network apparatuses respectively implement a part of functions of a base station. For example, the access network apparatus may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the access network apparatus may be a CU node, a DU node, or a device including a CU node and a DU node. In addition, the CU may be classified as an access network apparatus in an access network RAN, or the CU may be classified as an access network apparatus in a core network (core network, CN). This is not limited herein.

In different systems, the CU (or the CU-CP and the CU-UP), the DU, or the RU may also have different names, but a person skilled in the art may understand meanings thereof. For example, in an open RAN (open RAN, ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In this embodiment of this application, the access network apparatus has a cache function, and a cache (RAN cache) of the access network apparatus may store an AI model received from another network element (for example, a data storage function network element) or a device (for example, another access network apparatus). In addition, access network apparatuses can interact with each other to transfer the AI model. In addition, the access network apparatus further supports UE in requesting model deployment, and transmits the AI model cached by the access network apparatus to the UE.

DN: The DN is a data network providing a business service for a user. Generally, a client is located in a terminal, and a server is located in the data network. The data network may be a private network, for example, a local area network, or may be an external network that is not managed or controlled by an operator, for example, the internet (Internet), or may be a dedicated network jointly deployed by operators, for example, a network that provides an internet protocol (internet protocol, IP) multimedia core network subsystem (IP multimedia core network subsystem, IMS) service. An AI model provider may provide an AI model for UE by using the DN. For example, the AI model is deployed on an over the top (over the top, OTT) server in the DN, and the UE may request the AI model from the OTT server in the DN.

SMF: The SMF is used for session management, IP address allocation and management of a terminal, selection of a manageable user equipment plane function, policy control, a termination of an interface for a charging function, downlink data notification, and the like.

AMF: The AMF is used for mobility management, access management, and the like, and may be, for example, a mobility management entity (mobility management entity, MME) function in a 4G communication network or an AMF network element in a 5G network.

AF: The AF is used for data routing affected by an application, access a network exposure function, interact with a policy framework for policy control, and the like.

UPF: The UPF is used for packet routing and forwarding, quality of service (quality of service, QoS) handling for user plane data, and the like.

FIG. 2 is a diagram of another possible communication system according to an embodiment of this application. Compared with the system shown in FIG. 1, the system shown in FIG. 2 further includes the following network elements.

A data storage function (for example, data storage function, DSF) network element is responsible for a data storage function, for example, storing an AI model. In a specific implementation, the DSF network element may be independently deployed on a physical entity, or may be integrated with another network element (for example, a unified data repository (unified data repository, UDR) network element) on a same physical entity. This is not limited in this embodiment of this application.

A data processing function (for example, data processing function, DPF) network element is responsible for a data processing function. For example, in this embodiment of this application, the DPF network element may transmit an AI model to a RAN, and the AI model may be opened and stored on the RAN side. In a specific implementation, the DPF network element may be independently deployed on a physical entity, or may be integrated with another network element (for example, a UPF network element) on a same physical entity. This is not limited in this embodiment of this application. In a possible example, the DSF network element may be a UDR network element.

A control function network element is responsible for a control function of an AI service, and can perform data orchestration on an AI data-related network element (for example, a data collection coordination function (data collection coordination function, DCCF) network element, a network data analytics function (network data analytics function, NWDAF) network element, an analytics data repository function (analytics data repository function, ADRF) network element, a DSF network element, or a DPF network element). The orchestration includes selection of a network element, an operation instruction of a network element, establishment of a data channel (selection of a transmission protocol), and the like. For example, the control function network element is specifically an artificial intelligence service control function (for example, an artificial intelligence service control function, AISCF) network element, and may be responsible for orchestrating selection between a DSF and a DPF and data transmission between the DSF and the DPF. In a specific implementation, the AISCF network element may be a type of service control function (service control function, SCF) network element. The AISCF network element may be independently deployed on a physical entity, or the AISCF network element may be integrated with another network element on a same physical entity. This is not limited in this embodiment of this application.

It should be understood that, names of the foregoing network elements are merely examples. This application does not exclude a case in which the network elements have other names and functions of the network elements are combined. With evolution of technologies, any device or network element that can implement the functions of the foregoing network elements falls within the protection scope of this application.

In addition, in actual application, the network architecture may further include other network elements. This is not limited in this application.

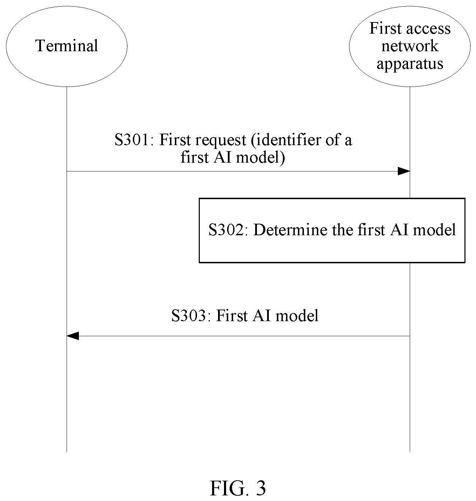

FIG. 3 shows an AI model deployment method according to an embodiment of this application. The method may be applied to the communication systems shown in FIG. 1 and FIG. 2, and includes S301 to S303.

S301: A terminal sends a first request, and a first access network apparatus receives the first request.

The first request is used for requesting a first AI model, and the first request includes an identifier of the first AI model.

The AI model in embodiments of this application includes, but is not limited to, a machine learning (machine learning, ML) model, a deep learning (deep learning, DL) model, and the like. In a specific example, the AI model is a large language model (large language model, LLM), that is, a deep learning model trained by using a large amount of text data, and may generate natural language text or understand the meaning of language text. It may be understood that, in this specification, an AI model may be referred to as an ML model, a DL model, an LLM, or the like.

In a possible implementation, before sending the first request, the terminal further obtains the identifier of the first AI model.

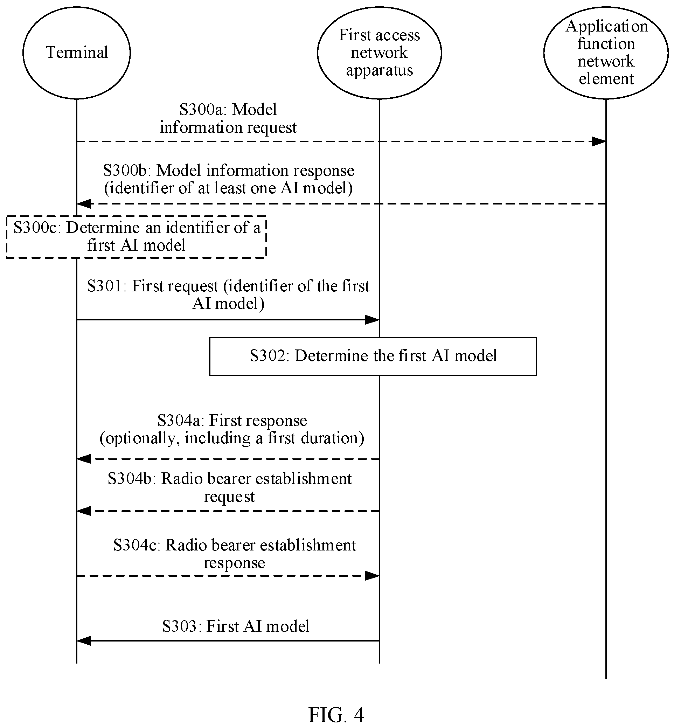

For example, as shown in FIG. 4, before S301, the following steps are further performed.

S300a: The terminal sends a model information request to an AF (it may be understood that the model information request may also be referred to by another name), to query AI models in a network (specifically, for example, a DSF); and the AF receives the model information request.

S300b: The AF returns a model information response to the terminal (it may be understood that the model information response may also be referred to by another name), where the response carries information about AI models existing in the network, for example, an identifier of at least one AI model; and the terminal receives the model information response.

Optionally, the model information request may include type information, which indicates a type of at least one AI model. Correspondingly, the AF may return, based on the type information, an identifier of at least one AI model of a corresponding type.

S300c: The terminal determines, based on the received model information response, an identifier of an AI model, for example, the identifier of the first AI model, from the identifier of the at least one AI model, and then performs step S301.

In this way, the terminal may send the first request based on the AI models existing in the network, avoiding requesting an AI model that does not exist in the network, thereby improving reliability of the solution.

It may be understood that, in FIG. 4, optional steps are marked by using dashed lines.

S302: The first access network apparatus determines the first AI model.

The first AI model is one of at least one AI model cached by the first access network apparatus; or the first AI model is one of at least one AI model cached by a second access network apparatus, and the second access network apparatus is adjacent to the first access network apparatus.

It may be understood that, the first access network apparatus may have one or more adjacent access network apparatuses. When the first access network apparatus has a plurality of adjacent access network apparatuses, the second access network apparatus is one of the plurality of adjacent access network apparatuses. The adjacent access network apparatus of the first access network apparatus refers to an access network apparatus that can directly communicate with the first access network apparatus, or an access network apparatus that is one hop away from the first access network apparatus in communication. In other words, a next hop of the first access network apparatus is an adjacent access network apparatus of the first access network apparatus.

In some embodiments, that the first access network apparatus determines the first AI model may be understood as follows: The first access network apparatus obtains the first AI model, or the first access network apparatus queries for the first AI model, or the like.

S303: The first access network apparatus sends the first AI model, and the terminal receives the first AI model.

Specifically, the first access network apparatus may transmit the first AI model based on a radio bearer between the first access network apparatus and the terminal.

In a possible implementation, after determining the first AI model and before sending the first AI model, the first access network apparatus further establishes the radio bearer with the terminal. Alternatively, the first access network apparatus may transmit the first AI model by using a radio bearer that has been established with the terminal (for example, a radio bearer used in a PDU session phase).

In this way, the first AI model can be transmitted based on the radio bearer, thereby improving transmission reliability.

In a possible implementation, after receiving the first request and before sending the first AI model (or establishing the radio bearer), the first access network apparatus may further return a first response to the terminal, where the first response indicates that the first access network apparatus has received the first request. Optionally, the first response further indicates that the first access network apparatus caches the first AI model or does not cache the first AI model.

In this way, the terminal can determine that the first request has been successfully sent.

In a possible implementation, after determining the first AI model and before sending the first AI model (or establishing the radio bearer), the first access network apparatus may further send a first duration to the terminal, where the first duration indicates a duration in which the terminal waits for the first AI model to start transmission. For example, the terminal starts timing after receiving the first duration. If the terminal still receives no data of the first AI model after the first duration elapses, the terminal no longer waits for transmission of the first AI model, and determines that the first AI model fails to be deployed (or the request for the first AI model fails).

Optionally, the duration may be carried in the first response.

Optionally, the first duration returned when the first access network apparatus caches the first AI model may be different from the first duration returned when the first access network apparatus does not cache the first AI model. For example, when the first access network apparatus caches the first AI model, the first duration is a first value; when the first access network apparatus does not cache the first AI model, the first duration is a second value, where the first value is less than the second value. In this way, a possibility of obtaining the first AI model from another access network apparatus or a core network element when the first access network apparatus does not cache the first AI model is considered, thereby improving a success rate of deploying the first AI model.

Alternatively, the first duration returned when the first access network apparatus caches the first AI model is the same as the first duration returned when the first access network apparatus does not cache the first AI model. This reduces implementation complexity.

In a possible implementation, a timer is configured for the terminal. After sending the first request (or receiving the first response), the terminal starts the timer. If the terminal receives no data of the first AI model after the timer expires (for example, exceeds the second duration), the terminal no longer waits for transmission of the first AI model, and determines that the first AI model fails to be deployed (or the request for the first AI model fails).

Optionally, in a specific implementation, both the first duration and the timer may be configured, and the terminal may determine, based on either of the first duration and the timer, whether the first AI model fails to be deployed.

As an example, as shown in FIG. 4, after S302 and before S303, the following steps are further performed.

S304a: The first access network apparatus sends a first response to the terminal, and the terminal receives the first response.

Optionally, the first response carries the first duration.

S304b: The first access network apparatus sends a radio bearer establishment request to the terminal (it may be understood that the radio bearer establishment request may also be referred to by another name), and the terminal receives the radio bearer establishment request.

S304c: The terminal sends a radio bearer establishment response to the first access network apparatus (it may be understood that the radio bearer establishment response may also be referred to by another name), and the first access network apparatus receives the radio bearer establishment response.

After a radio bearer is established, the first AI model may be transmitted based on the radio bearer (that is, S303 is performed).

It may be understood that, in embodiments of this application, an example in which the terminal requests one AI model (that is, the first AI model) at a time is used. However, in an actual application, the terminal may further request a plurality of AI models at a time. For example, in S301, in addition to the identifier of the first AI model, the first request may further include an identifier of another AI model. In S303, in addition to the first AI model, the first access network apparatus may further send the another AI model. For an obtaining method and a transmission method for the another AI model, refer to the obtaining method and the transmission method for the first AI model. Details are not described again.

In this embodiment of this application, an access network apparatus (for example, the first access network apparatus or the second access network apparatus) has a function of caching an AI model. After receiving the first request of the terminal, the first access network apparatus may send, to the terminal, the AI model cached by the first access network apparatus or an adjacent access network apparatus (for example, the second access network apparatus). It can be learned that in this embodiment of this application, the AI model may be deployed independently of a PDU session mechanism. The terminal does not need to access an API of the AI model in a DN by using the PDU session mechanism, but downloads the AI model locally for use, thereby protecting user privacy. The terminal also does not need to download the AI model from the DN by using the PDU session mechanism, thereby reducing occupation of network resources (for example, network load and bandwidth). In addition, the AI model may be cached in the access network apparatus, and a transmission path of the AI model is short, thereby improving AI model transmission efficiency. It can be learned that this embodiment of this application can protect user privacy, reduce network resource occupation, and improve AI model deployment efficiency.

In a possible design, the first request is a request sent to the first access network apparatus, or the terminal requests the first AI model from the first access network apparatus.

For example, the first request may be carried in a signaling radio bearer SRB. It may be understood that, after the SRB carrying the first request is transmitted to the first access network apparatus, the first access network apparatus may not need to forward the SRB to the core network (for example, an AMF).

Certainly, the SRB is merely a possible implementation, and the terminal may send the first request to the first access network apparatus in other manners.

Optionally, when the first request is a request sent to the first access network apparatus, the first access network apparatus may first query, based on the first request, whether the first AI model is in a cache of the first access network apparatus. If the first access network apparatus caches the first AI model, the first access network apparatus sends the first AI model to the first terminal.

Further, optionally, if the first access network apparatus does not cache the first AI model, the first access network apparatus queries the second access network apparatus for the first AI model. If the second access network apparatus caches the first AI model, the first access network apparatus may receive the first AI model from the second access network apparatus and then send the first AI model to the terminal.

Further, optionally, if the second access network apparatus does not cache the first AI model, the first access network apparatus may further obtain the first AI model from a core network element (for example, a data processing function network element), and then send the first AI model to the terminal.

The following lists several possible examples.

Example 1: The first AI model is in the cache of the first access network apparatus, and the first access network apparatus determines the first AI model from the cache of the first access network apparatus and delivers the first AI model to the terminal. The first AI model cached by the first access network apparatus may be obtained from another access network apparatus before the first request is received (for example, after a previous request that carries the identifier of the first AI model and that is sent by the terminal is received), and then cached locally (for an obtaining manner, refer to Example 2), or may be obtained from the core network element (for example, the data processing function network element), and then cached locally (for an obtaining manner, refer to Example 3). A source of the first AI model cached by the first access network apparatus is not limited in this embodiment of this application.

For a specific implementation procedure of this example, refer to the procedure shown in FIG. 4. Step S302 may specifically include: The first access network apparatus reads the first AI model from the local cache based on the identifier of the first AI model.

In Example 1, the terminal may obtain the AI model from the first access network apparatus without interacting with the core network, and a speed of obtaining the AI model is high.

Example 2: The first AI model is not in the cache of the first access network apparatus, the first access network apparatus queries for (or requests) the first AI model from an adjacent access network apparatus (for example, the second access network apparatus), and the first access network apparatus receives the first AI model from the second access network apparatus.

It may be understood that, the first access network apparatus may have one or more adjacent access network apparatuses.

When the first access network apparatus has only one adjacent access network apparatus (that is, the second access network apparatus), the first access network apparatus requests the first AI model from the adjacent access network apparatus.

When the first access network apparatus has a plurality of adjacent access network apparatuses, the first access network apparatus may request the first AI model from each adjacent access network apparatus. After the first access network apparatus receives the first AI model sent by any one of the adjacent access network apparatuses, the first access network apparatus may send, to another adjacent access network apparatus (for example, a third access network apparatus or a fourth access network apparatus), information indicating to stop querying for or transmitting the first AI model.

Alternatively, the first access network apparatus stores model cache information of each adjacent access network apparatus (for example, the first access network apparatus locally stores a mapping relationship between an identifier of an access network apparatus and an identifier of an AI model). The first access network apparatus determines, based on the model cache information of each adjacent access network apparatus, an adjacent access network apparatus (for example, the second access network apparatus) that caches the first AI model, and requests the first AI model from the adjacent access network apparatus.

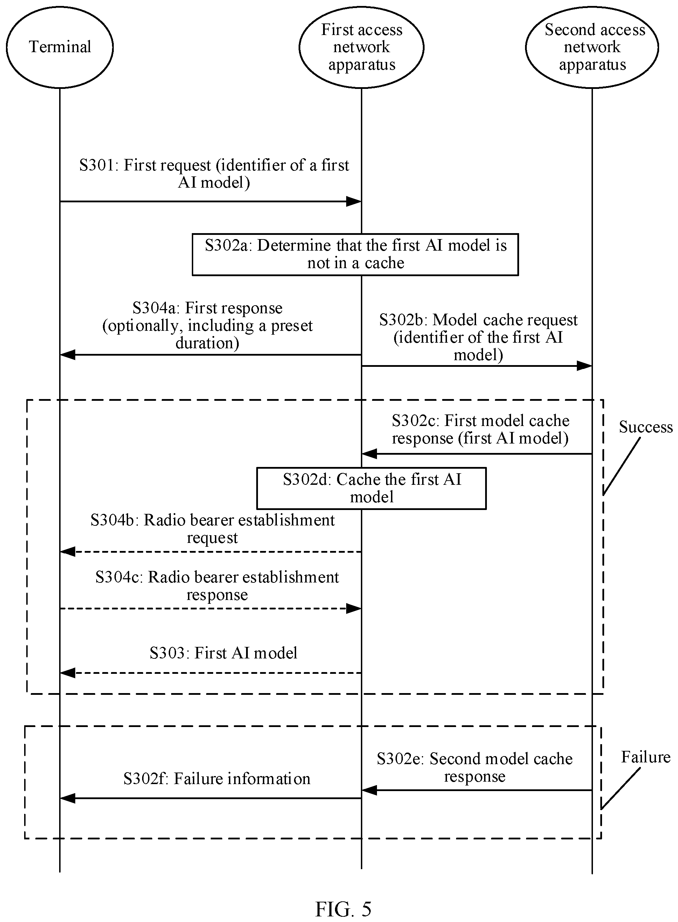

For example, as shown in FIG. 5, a procedure in which the first access network apparatus successfully obtains the first AI model from the second access network apparatus may include the following steps.

S302a: After receiving the first request, the first access network apparatus determines that the first AI model is not in the cache of the first access network apparatus.

S302b: The first access network apparatus sends a model cache request to the second access network apparatus (it may be understood that, the model cache request may also be referred to by another name), where the request carries the identifier of the first AI model, and the second access network apparatus receives the model cache request.

S302c: The second access network apparatus sends a first model cache response (it may be understood that, the model cache response may also be referred to by another name) and the first AI model to the first access network apparatus, and the first access network apparatus receives the first model cache response and the first AI model.

It may be understood that, the second access network apparatus may first send the first model cache response (where the response may indicate that the second access network apparatus caches the first AI model), and then send the first AI model. Alternatively, the second access network apparatus may simultaneously send the first model cache response and the first AI model, for example, include the first AI model in the first model cache response; or use the first AI model as the first model cache response, that is, send only the first AI model. This is not limited in this embodiment of this application.

S302d: The first access network apparatus caches the first AI model.

Then, the first access network apparatus may send the first AI model to the terminal.

It may be understood that, due to a large amount of data of the first AI model, the first AI model may be transmitted a plurality of times, and the first access network apparatus may send cached data of the first AI model to the terminal while caching the data of the first AI model.

Alternatively, the first access network apparatus may not cache the first AI model, and forward only the received first AI model to the terminal.

It may be understood that, a sequence of S304a to S304c and S302a to S302d is not limited in this application, and the sequence shown in FIG. 5 is merely an example.

It may be understood that, S302 may include S302a, S302b, S302c, and S302d.

In Example 2, the terminal may obtain the AI model from the adjacent access network apparatus of the first access network apparatus without interacting with the core network, and a speed of obtaining the AI model is high.

Example 3: If the first AI model is not in the cache of the first access network apparatus, the first access network apparatus further queries an adjacent access network apparatus (for example, the second access network apparatus) for the first AI model; and if the adjacent access network apparatus also does not have the first AI model, the first access network apparatus further obtains the first AI model from the core network element (for example, the data processing function network element).

In a possible implementation, after failing to obtain the first AI model from the second access network apparatus, the first access network apparatus may send, to the terminal, information indicating that the first AI model fails to be deployed (for ease of description, failure information for short below), so that after receiving the failure information, the terminal sends a second request to an application function network element, and the terminal requests the first AI model from the core network element (for example, the data processing function network element). Alternatively, if the terminal receives no first AI model after the waiting duration exceeds the preset duration (for example, the first duration or the second duration described above), the terminal sends the second request to the application function network element, so that the terminal requests the first AI model from the core network element (for example, the data processing function network element). That the terminal sends the second request to the application function network element may be that the terminal sends the second request to the application function network element via the first access network apparatus or the like.

For example, as shown in FIG. 5, a procedure in which the first access network apparatus fails to obtain the first AI model from the second access network apparatus may include the following steps.

S302a: The first access network apparatus determines that the first AI model is not in the cache of the first access network apparatus.

S302b: The first access network apparatus sends a model cache request to the second access network apparatus, where the request carries the identifier of the first AI model, and the second access network apparatus receives the model cache request.

S302e: The second access network apparatus sends a second model cache response (where the response may indicate that the second access network apparatus does not cache the first AI model) to the first access network apparatus, and the first access network apparatus receives the second model cache response.

Alternatively, the second access network apparatus may not send the second model cache response to the first access network apparatus. If the first access network apparatus receives no response (or no first AI model) after waiting for a specific duration, the first access network apparatus determines that the second access network apparatus does not cache the first AI model.

S302f: The first access network apparatus sends failure information to the terminal, and the terminal receives the failure information, and determines that the first AI model fails to be deployed.

Alternatively, the first access network apparatus does not send the failure information, and when the terminal receives no first AI model after the waiting duration exceeds the preset duration (for example, the first duration or the second duration described above), the terminal determines that the first AI model fails to be deployed.

It may be understood that, S302 may include S302a, S302b, S302e, and S302f.

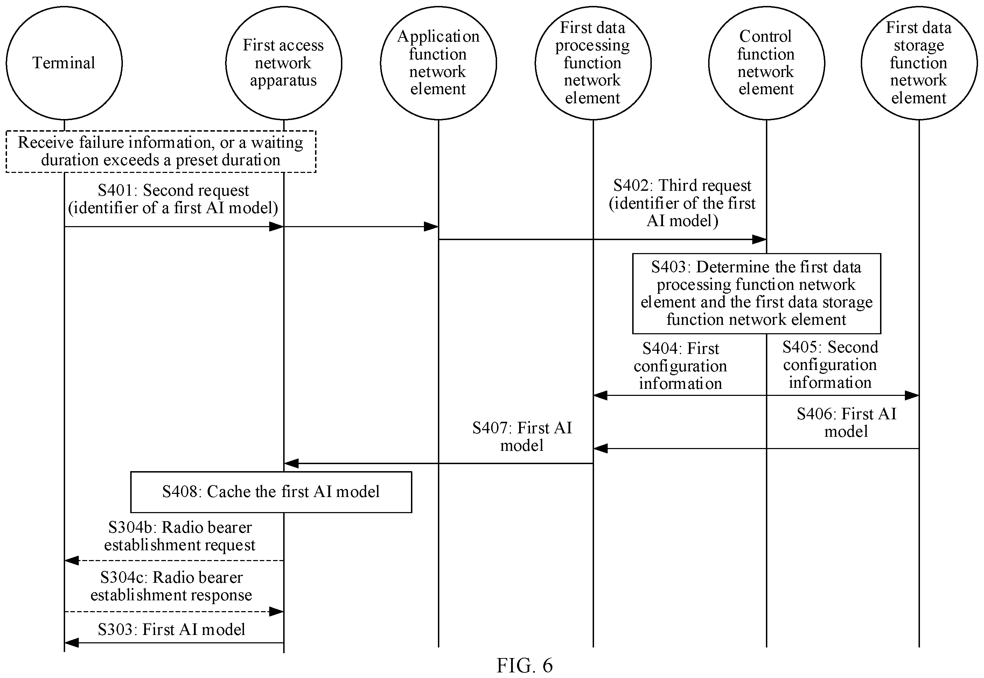

Refer to FIG. 6. After the terminal receives the failure information (that is, S302e), or after the waiting duration of the terminal exceeds the preset duration, a procedure in which the terminal requests the first AI model from the core network element may include the following steps.

S401: A terminal sends a second request to an application function network element via a first access network apparatus, and the application function network element receives the second request.

The second request carries an identifier of a first AI model, and the second request may be carried in a data radio bearer (data radio bearer, DRB).

S402: The application function network element sends a third request to a control function network element based on the second request, and the control function network element receives the third request, where the third request includes the identifier of the first AI model.

Optionally, the application function network element may directly forward the second request, that is, the third request is the second request; or the application function network element may process the second request and then forward the second request, that is, the third request is different from the second request. This is not limited in this embodiment of this application.

Optionally, after receiving the third request, the control function network element may further send a third response to the application function network element, and the application function network element sends the third response (where the third response may be the same as or different from a second response) to the terminal (via the first access network apparatus or the like). The second response and the third response may include a duration, for example, a third duration, indicating a duration in which the terminal waits for the first AI model to start transmission. The third duration may be the same as or different from the foregoing first duration or second duration. This is not limited in this embodiment of this application.

After receiving the third request, the control function network element orchestrates a data storage function network element and a data processing function network element to send the first AI model to the first access network apparatus, for example, performs S403 to S405.

S403: The control function network element determines a first data processing function network element and a first data storage function network element.

It may be understood that, one or more data storage function network elements and one or more data processing function network elements may be deployed in a network. When orchestrating the data storage function network element, the control function network element may select a data storage function network element that stores the first AI model. When orchestrating the data processing function network element, the control function network element may select a data processing function network element based on transmission quality (for example, delay, bandwidth, or jitter). The selected data processing function network element is the first data processing function network element, and the selected data storage function network element is the first data storage function network element.

It may be understood that, the control function network element may alternatively select a plurality of data processing function network elements. When there are a plurality of data processing function network elements, the control function network element sends configuration information to each data processing function network element, so that each data processing function network element can receive the first AI model from an upstream node (where the upstream node may be the first data storage function network element, another data processing function network element, or another forwarding node), and send the first AI model to a downstream node (where the downstream node may be the first access network apparatus, another data processing function network element, or another forwarding node). For example, the first data processing function network element receives the first AI model from the first data storage function network element, the first data processing function network element sends the first AI model to a second data storage function network element, and the second data processing function network element sends the first AI model to the first access network apparatus. For ease of description, one data processing function network element is used as an example in this embodiment of this application.

S404: The control function network element sends first configuration information to the first data processing function network element, and the first data processing function network element receives the first configuration information.

In a possible implementation, the first configuration information includes an identifier of the first access network apparatus.

It may be understood that, when sending the second request, the terminal includes address information (for example, an IP address) of the terminal in a header of a data packet in which the second request is located. When forwarding the second request, the application function network element also forwards the address information to the control function network element. The control function network element may query, from a user plane function network element based on the address information of the terminal, an identifier of an access network apparatus corresponding to the terminal, to obtain the identifier of the first access network apparatus, and include the identifier of the first access network apparatus in the first configuration information.

In a possible implementation, the first configuration information may not include the identifier of the first access network apparatus, and the first data processing function network element queries for the identifier of the first access network apparatus from the user plane function network element based on the address information of the terminal.

S405: The control function network element sends second configuration information to the first data storage function network element, and the first data storage function network element receives the second configuration information.

The second configuration information includes an identifier of the first data processing function network element and the identifier of the first AI model.

It may be understood that, a sequence of S404 and S405 is not limited in this embodiment of this application.

S406: After receiving the second configuration information, the first data storage function network element sends the first AI model to the first data processing function network element.

For example, the first AI model is determined from AI models stored in the first data storage function network element based on the identifier of the first AI model, and the first AI model is sent to the first data processing function network element based on the identifier of the first data processing function network element.

In a possible implementation, the first configuration information and the second configuration information may further include a transmission protocol. The transmission protocol is related to a first data pipeline, and the first data pipeline is a data pipeline between the first data storage function network element and the first data processing function network element; or the transmission protocol is related to a first data pipeline identifier, and the first data pipeline identifier indicates a data pipeline between the first data storage function network element and the first data processing function network element. Correspondingly, the first data storage function network element sends the first AI model according to the transmission protocol, and the first data processing function network element receives the first AI model according to the transmission protocol.

The transmission protocol includes but is not limited to one or more of the following: quick user datagram protocol (user datagram protocol, UDP) internet connections (quick UDP internet connections, QUIC), a loss-tolerant transmission protocol (loss-tolerant transmission protocol, LTP), a transmission control protocol (transmission control protocol, TCP), a hypertext transfer protocol (hypertext transfer protocol, HTTP), and the like.

In this embodiment of this application, the transmission protocol between the data processing function network element and the data storage function network element can be configured. The control function network element may flexibly configure the transmission protocol based on a type of data to be transmitted between the data processing function network element and the data storage function network element. For example, considering a large amount of transmitted data of the AI model, the QUIC or LTP protocol may be configured for the first data processing function network element and the first data storage function network element, so that the first data processing function network element and the first data storage function network element transmit the AI model according to the QUIC or LTP protocol, to further improve transmission efficiency of the AI model between the first data processing function network element and the first data storage function network element, and reduce or avoid network congestion.

S407: After receiving the first configuration information and the first AI model, the first data processing function network element sends the first AI model to the first access network apparatus based on the identifier of the first access network apparatus, and the first access network apparatus receives the first AI model.

S408: The first access network apparatus caches the first AI model.

Then, the first access network apparatus may send the first AI model to the terminal (that is, perform S303).

It may be understood that, S302 may further include S407 and S408.

In another possible implementation, after the first access network apparatus fails to obtain the first AI model from a second access network apparatus, the first access network apparatus may not return failure information to the terminal, but directly request the first AI model from a core network, so that the first access network apparatus obtains the first AI model from the core network element (for example, a data processing function network element).

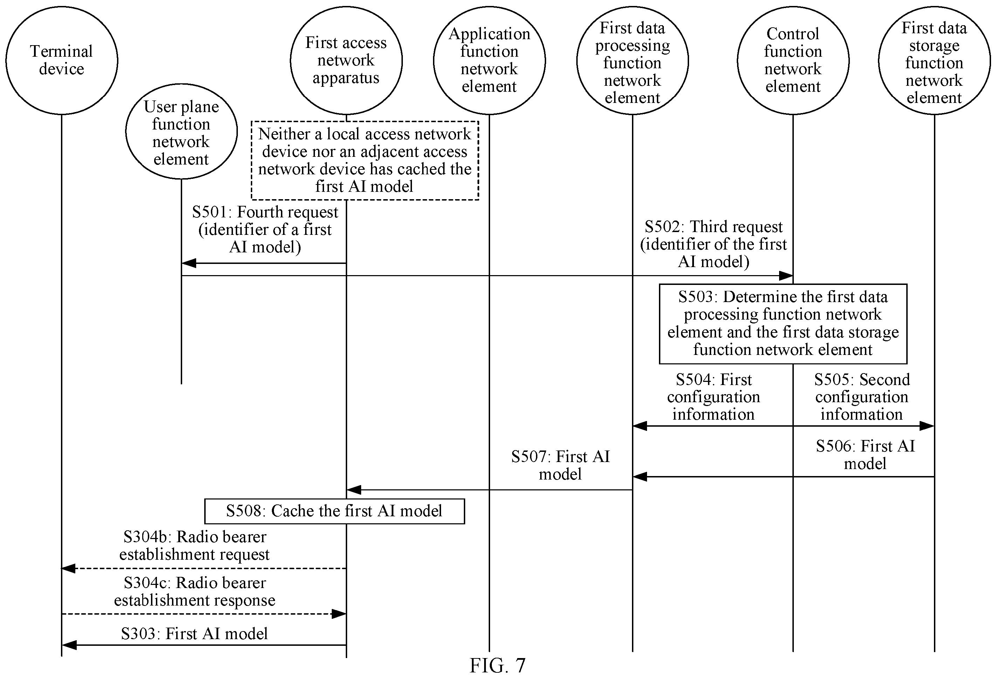

For example, as shown in FIG. 7, a procedure in which the first access network apparatus obtains the first AI model from the core network may include the following steps.

S501: A first access network apparatus sends a fourth request to a user plane function network element, where the fourth request includes an identifier of a first AI model, and the user plane function network element receives the fourth request.

In a specific implementation, the first access network apparatus may send the fourth request to the user plane function network element based on a data path between the first access network apparatus and the user plane function network element. For example, the first access network apparatus may deploy a session proxy (session proxy, SP) functional module. The SP functional module may trigger establishment of the data path between the first access network apparatus and the user plane function network element, and a session management function network element may configure session information for the user plane function network element and the first access network apparatus (that is, a DRB from the terminal to the first access network apparatus does not need to be established), so that the first access network apparatus can directly interact with the user plane function network element.

S502: The user plane function network element sends a third request to a control function network element, and the control function network element receives the third request, where the third request includes the identifier of the first AI model.

The third request may be the same as or different from the fourth request. This is not limited.

It may be understood that herein, an example in which the first access network apparatus requests the first AI model from the control function network element via the user plane function network element is used. In an actual application, the first access network apparatus may alternatively request the first AI model from the control function network element via another network element or directly request the first AI model from the control function network element.

S503: The control function network element determines a first data processing function network element and a first data storage function network element.

S504: The control function network element sends first configuration information to the first data processing function network element, and the first data processing function network element receives the first configuration information.

S505: The control function network element sends second configuration information to the first data storage function network element, and the first data storage function network element receives the second configuration information.

S506: After receiving the second configuration information, the first data storage function network element sends the first AI model to the first data processing function network element, and the first data processing function network element receives the first AI model.

S507: After receiving the first configuration information and the first AI model, the first data processing function network element sends the first AI model to the first access network apparatus based on an identifier of the first access network apparatus, and the first access network apparatus receives the first AI model.

S508: The first access network apparatus caches the first AI model.

For a specific implementation of S502 to S508, refer to S402 to S408. Details are not described again.

Then, the first access network apparatus may send the first AI model to the terminal (that is, perform S303).

A difference between the solution shown in FIG. 7 and the solution shown in FIG. 6 lies in that: In FIG. 6, the terminal sends the third request to the control function network element via the application function network element, and in FIG. 7, the first access network apparatus sends the third request to the control function network element via the user plane function network element.

In Example 3, the terminal first attempts to obtain an AI model from the access network (for example, the first access network apparatus and the access network apparatus adjacent to the first access network apparatus), and then obtains the AI model from the core network after the attempt fails. This can ensure that the terminal finally obtains the AI model, to improve reliability of the solution.

According to the foregoing design, the terminal may request the first AI model from the access network (for example, the first access network apparatus or the adjacent access network apparatus of the first access network apparatus). If the access network has the first AI model, the access network does not need to interact with the core network, so that network resource occupation can be reduced as much as possible and AI model deployment efficiency can be improved. If the access network does not have the first AI model, the first AI model may be further obtained from the core network, to improve reliability of deploying the AI model.

In another possible design, the first request is a request sent to a core network element (for example, an application function network element, or a control function network element), or the terminal requests the first AI model from the core network element. For example, the first request may be carried in a signaling radio bearer (signaling radio bearer, SRB).

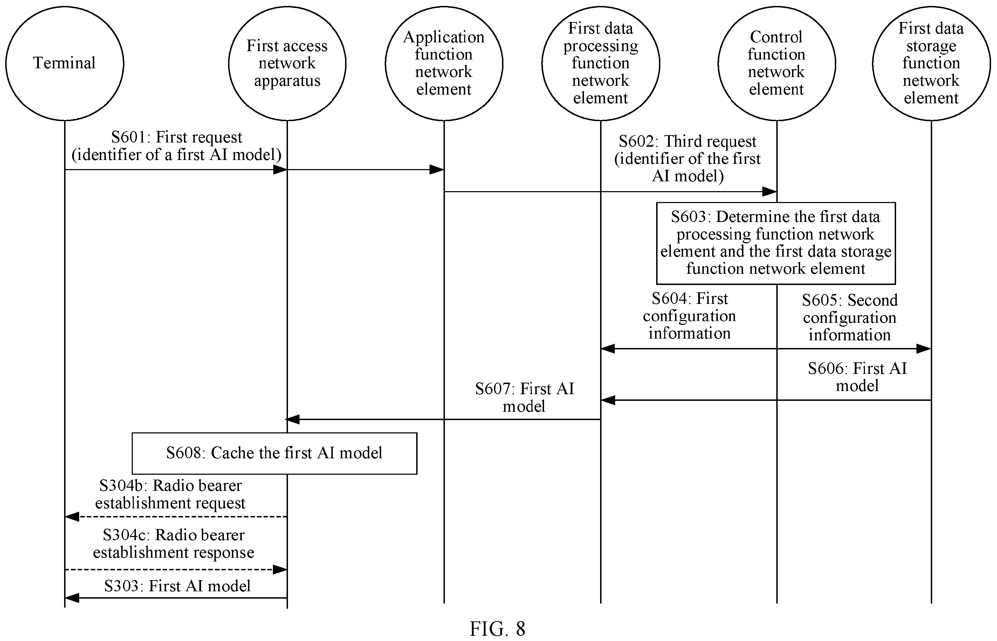

For example, as shown in FIG. 8, a procedure in which the terminal requests the first AI model from the core network element is as follows.

S601: A terminal sends a first request to an application function network element via a first access network apparatus, and the application function network element receives the first request, where the first request includes an identifier of a first AI model.

Specifically, the terminal sends the first request to the first access network apparatus, and after receiving the first request, the first access network apparatus forwards the first request to the application function network element. It may be understood that, S601 includes S301.

S602: The application function network element sends a third request to a control function network element based on the first request, and the control function network element receives the third request, where the third request includes the identifier of the first AI model.

Optionally, the application function network element may directly forward the first request, that is, the third request is the first request; or the application function network element may process the first request and then forward the first request, that is, the third request is different from the first request. This is not limited in this embodiment of this application.

S603: The control function network element determines a first data processing function network element and a first data storage function network element.

S604: The control function network element sends first configuration information to the first data processing function network element, and the first data processing function network element receives the first configuration information.

S605: The control function network element sends second configuration information to the first data storage function network element, and the first data storage function network element receives the second configuration information.

S606: After receiving the second configuration information, the first data storage function network element sends the first AI model to the first data processing function network element, and the first data processing function network element receives the first AI model.

S607: After receiving the first configuration information and the first AI model, the first data processing function network element sends the first AI model to the first access network apparatus based on the identifier of the first access network apparatus, and the first access network apparatus receives the first AI model.

S608: The first access network apparatus caches the first AI model.

It may be understood that, S302 may include S602 to S608.

Then, the first access network apparatus may send the first AI model to the terminal (that is, perform S303).

For a specific implementation of S602 to S608, refer to S402 to S408. Details are not described herein again.

A difference between the solution shown in FIG. 8 and the solution shown in FIG. 6 lies in that: In FIG. 6, after the terminal fails to obtain the first AI model from the first access network apparatus and the access network apparatus adjacent to the first access network apparatus, the terminal requests the first AI model from the core network element; and in FIG. 8, the terminal directly requests the first AI model from the core network element.

It may be understood that, after obtaining the first AI model, the terminal may directly initiate a request to the first access network apparatus when the terminal needs to obtain the first AI model next time (refer to the solutions shown in FIG. 4 to FIG. 7).

According to the foregoing design, the terminal may directly obtain the first AI model from the core network, and the process does not need to depend on a PDU session mechanism, thereby achieving effects such as protecting user privacy, reducing network resource occupation, and improving AI model transmission efficiency.

In a possible design, the control function network element may record model cache information, and the model cache information includes information about an AI model cached in at least one access network apparatus. For example, the control function network element stores a mapping relationship between an identifier of an access network apparatus and an identifier of an AI model. The mapping relationship indicates AI models cached by each of the at least one access network apparatus. For example, Table 1 is an example of model cache information recorded by the control function network element.

**Table 1 Model cache information**

| Identifier of an access network apparatus | Identifier of an AI model |
|---|---|
| Identifier of a first access network apparatus | Identifier of a first AI model, and identifier of a second AI model |
| Identifier of a second access network apparatus | Identifier of a second AI model, and identifier of a third AI model |
| ... | ... |

It can be learned from Table 1 that the first access network apparatus caches the first AI model and the second AI model, and the second access network apparatus caches the second AI model and the third AI model.

It may be understood that, Table 1 is merely an example, and a format of the actual model cache information is not limited thereto.

In a possible implementation, after the first data processing function network element sends the first AI model to the first access network apparatus, the first data processing function network element sends the identifier of the first access network apparatus and the identifier of the first AI model to the control function network element, so that the control function network element may update, based on the received identifier of the first access network apparatus and the received identifier of the first AI model, the model cache information of the first access network apparatus.

In another possible implementation, after the first access network apparatus receives (for example, from the second access network apparatus or the first data processing function network element) and caches the first AI model, the first access network apparatus (for example, via the user plane function network element) sends the identifier of the first access network apparatus and the identifier of the first AI model to the control function network element, so that the control function network element may update the model cache information of the first access network apparatus based on the received identifier of the first access network apparatus and the received identifier of the first AI model.

It may be understood that, if the control function network element originally does not have the model cache information of the first access network apparatus, the control function network element may update the model cache information by creating the model cache information of the first access network apparatus, for example, creating an entry corresponding to the first access network apparatus. If the control function network element originally records the model cache information of the first access network apparatus, the control function network element may update the model cache information by adding information content to the original model cache information of the first access network apparatus, for example, filling in an entry corresponding to the first access network apparatus with the identifier of the first AI model. In addition, the first access network apparatus or the first data processing function network element may further report other information content (for example, a deletion instruction, or a replacement instruction), so that the control function network element may update the model cache information in another manner like replacement, deletion, or the like. This is not limited in this embodiment of this application.

According to the foregoing design, the control function network element may learn of information about the AI model cached by each access network apparatus, to better control and manage the AI model cached by each access network apparatus.

In a possible design, the control function network element may further subscribe to a model update event from the first data storage function network element, so that when the AI model stored in the data storage function network element changes, the control function network element can learn of a change of the AI model in a timely manner and update the AI model cached by the access network apparatus.

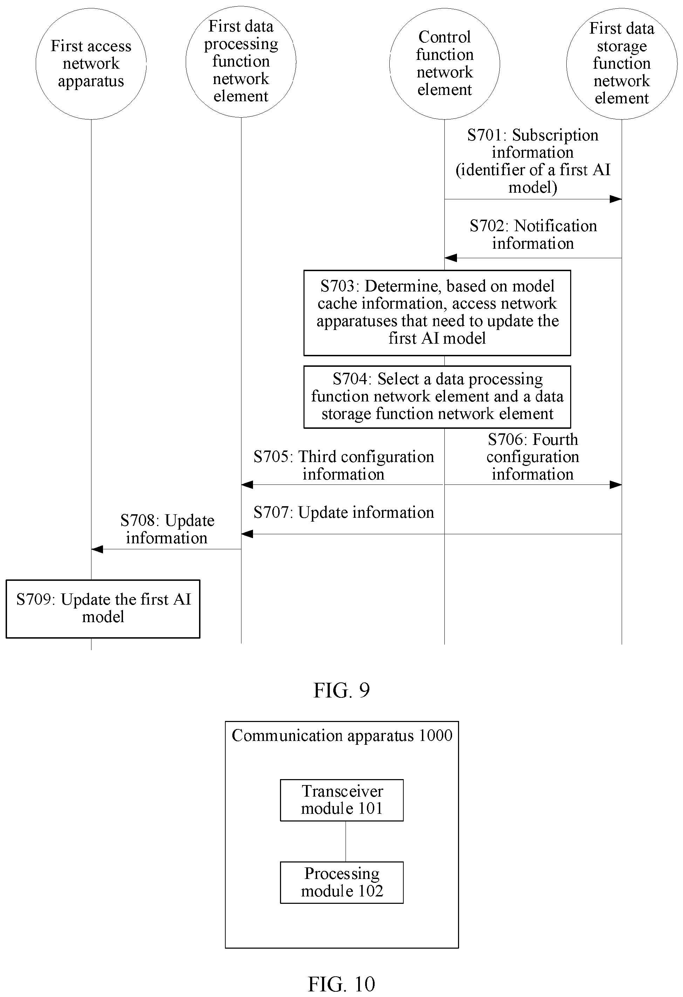

For example, FIG. 9 is an example of updating an AI model, including the following steps.

S701: A control function network element sends subscription information to a first data storage function network element, and the first data storage function network element receives the subscription information, where the subscription information includes an identifier of a first AI model.

S702: When the first AI model stored in the first data storage function network element is updated, the first data storage function network element sends notification information to the control function network element based on the subscription information, and the control function network element receives the notification information, where the notification information indicates that the first AI model is updated.

S703: The control function network element determines, based on model cache information stored in the control function network element, access network apparatuses that need to update the first AI model.

For example, if only the first access network apparatus stores the first AI model, only the first access network apparatus needs to update the first AI model.

S704: The control function network element selects a data processing function network element and a data storage function network element based on the determined access network apparatus.

For example, a first data processing function network element and a first data storage function network element are determined.

S705: The control function network element sends third configuration information to the first data processing function network element, and the first data processing function network element receives the third configuration information.

S706: The control function network element sends fourth configuration information to the first data storage function network element, and the first data storage function network element receives the fourth configuration information.

It may be understood that, there is no sequence between S705 and S706.

For content of the third configuration information, refer to the foregoing first configuration information, and for content of the fourth configuration information, refer to the foregoing second configuration information.

S707: The first data storage function network element sends update information to the first data processing function network element, and the first data processing function network element receives the update information.

The update information may be a changed data part in the first AI model, or may be all data parts in the first AI model. This is not limited in this embodiment of this application.

S708: The first data processing function network element sends the update information to the first access network apparatus, and the first access network apparatus receives the update information.

S709: The first access network apparatus updates the cached first AI model based on the update information.

It may be understood that, in FIG. 9, for example, the control function network element subscribes to the model update event for one AI model (that is, the first AI model) at a time. In an actual application, the control function network element may further subscribe to the model update event for a plurality of AI models at a time, for example, subscribe to all model update events stored by the data storage function network element. This is not limited in this embodiment of this application.

Certainly, in FIG. 9, for example, the AISCF manages and controls an update of the AI model. In an actual application, another network element may further manage or control the update of the AI model, or the DSF manages or controls the update of the AI model. For example, the DSF may store the model cache information, and when a model is updated, the DSF directly pushes the update information to the access network apparatus by using the DPF.

According to the foregoing design, when the AI model stored in the data storage function network element is updated, the AI model cached by the access network apparatus can be updated in a timely manner, to ensure timeliness of updating the AI model, and improve user experience.

It may be understood that, the foregoing embodiments of this application may be separately implemented, or may be combined with each other. This is not limited in embodiments of this application.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus. The apparatus includes a module/unit/means for performing the method performed by the device in the foregoing method embodiment. The module/unit/means may be implemented by software, may be implemented by hardware, or may be implemented by hardware executing corresponding software.

For example, FIG. 10 is a diagram of a communication apparatus 1000 according to an embodiment of this application. The apparatus 1000 includes a transceiver module 101 and a processing module 102.

When the apparatus 1000 is a first access network apparatus or is located in the first access network apparatus, functions of modules of the apparatus 1000 are as follows:
the transceiver module 101 is configured to receive a first request from a terminal, where the first request includes an identifier of a first AI model;
the processing module 102 is configured to determine a first AI model, where the first AI model is one of at least one AI model cached by the first access network apparatus or a second access network apparatus, and the second access network apparatus is adjacent to the first access network apparatus; and
the transceiver module 101 is further configured to send the first AI model to the terminal.

When the apparatus 1000 is a terminal or is located in the terminal, functions of modules of the apparatus 1000 are as follows:
the transceiver module 101 is configured to: send a first request to a first access network apparatus, where the first request includes an identifier of a first AI model; and receive the first AI model from the first access network apparatus, where the first AI model is one of at least one AI model cached by the first access network apparatus or a second access network apparatus, and the second access network apparatus is adjacent to the first access network apparatus.

When the apparatus 1000 is a first data processing function network element or is located in the first data processing function network element, functions of modules of the apparatus 1000 are as follows:
the transceiver module 101 is configured to: receive first configuration information from a control function network element, where the first configuration information includes an identifier of a first access network apparatus; and receive a first AI model from a first data storage function network element; and
the processing module 102 is configured to send the first AI model to the first access network apparatus based on the identifier of the first access network apparatus.

When the apparatus 1000 is a first data storage function network element or is located in the first data storage function network element, functions of modules of the apparatus 1000 are as follows:
the transceiver module 101 is configured to: receive second configuration information from a control function network element, where the second configuration information includes an identifier of a first data processing function network element and an identifier of a first AI model; and send the first AI model to the first data processing function network element.

When the apparatus 1000 is a control function network element or is located in the control function network element, functions of modules of the apparatus 1000 are as follows:
the transceiver module 101 is configured to receive a third request from an application function network element or a user plane network element, where the third request includes an identifier of a first AI model;
the processing module 102 is configured to determine a first data storage function network element and a first data processing function network element based on the third request; and
the transceiver module 101 is further configured to send first configuration information to the first data processing function network element and send second configuration information to the first data storage function network element, where the first configuration information includes an identifier of a first access network apparatus, and the second configuration information includes an identifier of the first data processing function network element and the identifier of the first AI model.

In a specific implementation, the apparatus 1000 may have a plurality of product forms. The following describes several possible product forms.

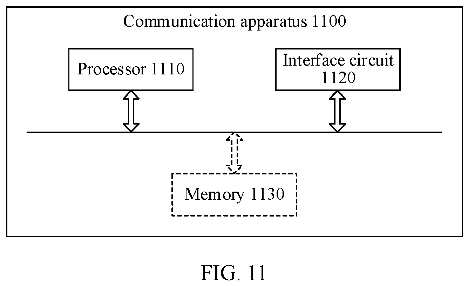

As shown in FIG. 11, an embodiment of this application provides a communication apparatus 1100. The communication apparatus 1100 includes a processor 1110 and an interface circuit 1120. The interface circuit 1120 is configured to receive a signal from a communication apparatus other than the communication apparatus and transmit the signal to the processor 1110, or send a signal from the processor 1110 to a communication apparatus other than the communication apparatus. The processor 1110 is configured to implement, by using a logic circuit or executing instructions, the method performed by any one of the devices or network elements in the foregoing method embodiment.

The processor 1110 and the interface circuit 1120 are coupled to each other. It can be understood that, the interface circuit 1120 may be a transceiver or an input/output interface. Optionally, the communication apparatus 1100 may further include a memory 1130, configured to store instructions executed by the processor 1110, or store input data required by the processor 1110 to run instructions, or store data generated after the processor 1110 runs instructions.

When the communication apparatus is a chip used in a terminal, the chip implements functions of the terminal in the foregoing method embodiment. The chip receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in an access network apparatus, the module in the access network apparatus implements a function of the access network apparatus in the foregoing method embodiment. The module in the access network apparatus receives information from another module (for example, a radio frequency module or an antenna) in the access network apparatus, where the information is sent by a terminal to the access network apparatus. Alternatively, the module in the access network apparatus sends information to another module (for example, a radio frequency module or an antenna) in the access network apparatus, where the information is sent by the access network apparatus to a terminal. The module in the access network apparatus herein may be a baseband chip of the access network apparatus, or may be a DU or another module. The DU herein may be a DU in an open radio access network (open radio access network, O-RAN) architecture.

It should be understood that, the processor mentioned in embodiments of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate or a transistor logic device, a discrete hardware component, or the like. The general-purpose processor may be a microprocessor, or the processor may be any conventional processor or the like.

It should be understood that, the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, a storage (storage module) may be integrated into the processor.

It should be noted that, the memory described in this specification aims to include but is not limited to these memories and any memory of another proper type. Based on a same technical concept, an embodiment of this application further provides a computer-readable storage medium. The storage medium stores a computer program or instructions. When the computer program or the instructions are executed by a processor, the method performed by any one of the devices or network elements in the foregoing method embodiment is implemented.

Based on a same technical concept, an embodiment of this application further provides a computer program product, including a computer program or instructions. When the computer program or the instructions are executed by a processor, the method performed by any one of the devices or network elements in the foregoing method embodiment is implemented.

A person skilled in the art should understand that, embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. An artificial intelligence AI model deployment method, comprising:
receiving, by a first access network apparatus, a first request from a terminal, wherein the first request comprises an identifier of a first AI model;
determining, by the first access network apparatus, the first AI model, wherein the first AI model is one of at least one AI model cached by the first access network apparatus or a second access network apparatus, and the second access network apparatus is adjacent to the first access network apparatus; and
sending, by the first access network apparatus, the first AI model to the terminal.

2. The method according to claim 1, wherein the method further comprises:
obtaining, by the first access network apparatus, the first AI model from the second access network apparatus, and storing the first AI model into a cache of the first access network apparatus; or
receiving, by the first access network apparatus, the first AI model from a first data processing function network element, and storing the first AI model into a cache of the first access network apparatus.

3. The method according to claim 1 or 2, wherein the first request is carried in a signaling radio bearer.

4. The method according to any one of claims 1 to 3, wherein determining, by the first access network apparatus, the first AI model comprises:
querying, by the first access network apparatus based on the first request, whether the first AI model is in the cache of the first access network apparatus.

5. The method according to claim 4, wherein the first AI model is not in the cache of the first access network apparatus; and the method further comprises:
querying, by the first access network apparatus, the second access network apparatus for the first AI model; and
receiving, by the first access network apparatus, the first AI model sent by the second access network apparatus.

6. The method according to claim 5, wherein the method further comprises:
storing, by the first access network apparatus, the first AI model into the cache of the first access network apparatus.

7. The method according to claim 1, wherein the first request is carried in a data radio bearer; and
the method further comprises:
forwarding, by the first access network apparatus, the first request to an application function network element; and
receiving, by the first access network apparatus, the first AI model from a first data processing function network element, and storing the first AI model into a cache of the first access network apparatus.

8. The method according to any one of claims 1 to 7, wherein after receiving, by the first access network apparatus, the first request from the terminal, the method further comprises:
sending, by the first access network apparatus, a first duration to the terminal, wherein the first duration is a duration in which the terminal waits for the first AI model to start transmission.

9. The method according to any one of claims 1 to 8, wherein the method further comprises:
receiving, by the first access network apparatus, update information from the first data processing function network element, wherein the update information is used for updating the first AI model.

10. An artificial intelligence AI model deployment method, comprising:
sending, by a terminal, a first request to a first access network apparatus, wherein the first request comprises an identifier of a first AI model; and
receiving, by the terminal, the first AI model from the first access network apparatus, wherein the first AI model is one of at least one AI model cached by the first access network apparatus or a second access network apparatus, and the second access network apparatus is adjacent to the first access network apparatus.

11. The method according to claim 10, wherein the first request is carried in a signaling radio bearer.

12. The method according to claim 10, wherein the first request is carried in a data radio bearer.

13. The method according to claim 11, wherein after sending, by the terminal, the first request to the first access network apparatus, and before receiving, by the terminal, the first AI model from the first access network apparatus, the method further comprises:
if a waiting duration of the terminal exceeds a preset duration, or the terminal receives, from the first access network apparatus, information indicating that the first AI model fails to be deployed, sending, by the terminal, a second request to an application function network element via the first access network apparatus, wherein the second request comprises the identifier of the first AI model, and the second request is carried in a data radio bearer.

14. The method according to claim 13, wherein the preset duration is a first duration; and after sending, by the terminal, the first request to the first access network apparatus, and before receiving, by the terminal, the first AI model from the first access network apparatus, the method further comprises:
receiving, by the terminal, the first duration from the first access network apparatus; and
waiting, by the terminal within the first duration, for the first AI model to start transmission.

15. The method according to claim 13, wherein the preset duration is a second duration, and the second duration is a duration of a timer configured by the terminal.

16. An artificial intelligence AI model deployment method, comprising:
receiving, by a first data processing function network element, first configuration information from a control function network element, wherein the first configuration information comprises an identifier of a first access network apparatus;
receiving, by the first data processing function network element, a first AI model from a first data storage function network element; and
sending, by the first data processing function network element the first AI model to the first access network apparatus based on the identifier of the first access network apparatus.

17. The method according to claim 16, wherein the first configuration information further comprises a transmission protocol, the transmission protocol is related to a first data pipeline, and the first data pipeline is a data pipeline between the first data storage function network element and the first data processing function network element; and
receiving, by the first data processing function network element, the first AI model from the first data storage function network element comprises:
receiving, by the first data processing function network element, the first AI model from the first data storage function network element according to the transmission protocol.

18. The method according to claim 16 or 17, wherein after sending, by the first data processing function network element, the first AI model to the first access network apparatus, the method further comprises:
sending, by the first data processing function network element, the identifier of the first access network apparatus and an identifier of the first AI model to the control function network element.

19. The method according to any one of claims 16 to 18, wherein the method further comprises:
receiving, by the first data processing function network element, update information from the first data storage function network element, wherein the update information is used for updating the first AI model; and
sending, by the first data processing function network element, the update information to the first access network apparatus.

20. An artificial intelligence AI model deployment method, comprising:
receiving, by a first data storage function network element, second configuration information from a control function network element, wherein the second configuration information comprises an identifier of a first data processing function network element and an identifier of a first AI model; and
sending, by the first data storage function network element, the first AI model to the first data processing function network element.

21. The method according to claim 20, wherein the second configuration information further comprises a transmission protocol, the transmission protocol is related to a first data pipeline, and the first data pipeline is a data pipeline between the first data storage function network element and the first data processing function network element; and
sending, by the first data storage function network element, the first AI model to the first data processing function network element comprises:
sending, by the first data storage function network element, the first AI model to the first data processing function network element according to the transmission protocol.

22. The method according to claim 20 or 21, wherein the method further comprises:
receiving, by the first data storage function network element, subscription information from the control function network element, wherein the subscription information comprises the identifier of the first AI model; and
when the first AI model stored in the first data storage function network element is updated, sending, by the first data storage function network element, notification information to the control function network element based on the subscription information, wherein the notification information indicates that the first AI model is updated.

23. The method according to claim 22, wherein the method further comprises:
sending, by the first data storage function network element, update information to the first data processing function network element, wherein the update information is used for updating the first AI model.

24. An artificial intelligence AI model deployment method, comprising:
receiving, by a control function network element, a third request from an application function network element or a user plane network element, wherein the third request comprises an identifier of a first AI model;
determining, by the control function network element, a first data storage function network element and a first data processing function network element based on the third request; and
sending, by the control function network element, first configuration information to the first data processing function network element and second configuration information to the first data storage function network element, wherein the first configuration information comprises an identifier of a first access network apparatus, and the second configuration information comprises an identifier of the first data processing function network element and the identifier of the first AI model.

25. The method according to claim 24, wherein the first configuration information and the second configuration information further comprise a transmission protocol, the transmission protocol is related to a first data pipeline, and the first data pipeline is a data pipeline between the first data storage function network element and the first data processing function network element.

26. The method according to claim 24 or 25, wherein a data packet in which the second request is located carries address information of a terminal; and the method further comprises:
querying, by the control function network element from the user plane function network element based on the address information of the terminal, an identifier of an access network apparatus corresponding to the terminal, to obtain the identifier of the first access network apparatus.

27. The method according to any one of claims 24 to 26, wherein the method further comprises:
receiving, by the control function network element, the identifier of the first access network apparatus and the identifier of the first AI model from the first data processing function network element; and
updating, by the control function network element, model cache information based on the identifier of the first access network apparatus and the identifier of the first AI model, wherein the model cache information comprises information about an AI model cached in at least one access network apparatus.

28. The method according to claim 27, wherein the method further comprises:
sending, by the control function network element, subscription information to the first data storage function network element, wherein the subscription information comprises the identifier of the first AI model;
receiving, by the control function network element, notification information from the first data storage function network element, wherein the notification information indicates that the first AI model is updated; and
configuring, by the control function network element based on the model cache information, the first data storage function network element and the first data processing function network element to send update information to the first access network apparatus, wherein the update information is used for updating the first AI model.

29. An artificial intelligence AI model deployment method, comprising:
receiving, by a control function network element, a third request from an application function network element or a user plane network element, wherein the third request comprises an identifier of a first AI model;
determining, by the control function network element, a first data storage function network element and a first data processing function network element based on the third request;
sending, by the control function network element, first configuration information to the first data processing function network element and second configuration information to the first data storage function network element, wherein the first configuration information comprises an identifier of a first access network apparatus, and the second configuration information comprises an identifier of the first data processing function network element and the identifier of the first AI model;
receiving, by the first data storage function network element, the second configuration information from the control function network element, and sending the first AI model to the first data processing function network element; and
receiving, by the first data processing function network element, the first configuration information from the control function network element, receiving the first AI model from the first data storage function network element, and sending the first AI model to the first access network apparatus based on the identifier of the first access network apparatus.

30. A communication apparatus, wherein the apparatus comprises a module configured to perform the method according to any one of claims 1 to 9, or comprises a module configured to perform the method according to any one of claims 10 to 15, or comprises a module configured to perform the method according to any one of claims 16 to 19, or comprises a module configured to perform the method according to any one of claims 20 to 23, or comprises a module configured to perform the method according to any one of claims 24 to 28.

31. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement, by using a logic circuit or executing instructions, the method according to any one of claims 1 to 9, or the method according to any one of claims 10 to 15, or the method according to any one of claims 16 to 19, or the method according to any one of claims 20 to 23, or the method according to any one of claims 24 to 28.

32. A computer-readable storage medium, wherein the storage medium stores a computer program or instructions, and when the computer program or the instructions are executed by a processor, the method according to any one of claims 1 to 9 is implemented, or the method according to any one of claims 10 to 15 is implemented, or the method according to any one of claims 16 to 19 is implemented, or the method according to any one of claims 20 to 23 is implemented, or the method according to any one of claims 24 to 28 is implemented.

33. A computer program product, comprising a computer program or instructions, wherein when the computer program or the instructions are executed by a processor, the method according to any one of claims 1 to 9 is implemented, or the method according to any one of claims 10 to 15 is implemented, or the method according to any one of claims 16 to 19 is implemented, or the method according to any one of claims 20 to 23 is implemented, or the method according to any one of claims 24 to 28 is implemented.

34. A communication apparatus, comprising a transceiver module and a processing module, wherein
the transceiver module is configured to receive a first request from a terminal, wherein the first request comprises an identifier of a first artificial intelligence AI model;
the processing module is configured to determine the first AI model, wherein the first AI model is one of at least one AI model cached by a first communication apparatus or a second communication apparatus, and the second communication apparatus is adjacent to the first communication apparatus; and
the transceiver module is further configured to send the first AI model to the terminal.

35. The communication apparatus according to claim 34, wherein the transceiver module is further configured to:
obtain the first AI model from the second communication apparatus, and store the first AI model into a cache of the first communication apparatus; or
receive the first AI model from a first data processing function network element, and store the first AI model into a cache of the first communication apparatus.

36. The communication apparatus according to claim 34 or 35, wherein the first request is carried in a signaling radio bearer.

37. The communication apparatus according to any one of claims 34 to 36, wherein the transceiver module is further configured to: query, based on the first request, whether the first AI model is in the cache of the first communication apparatus.

38. The communication apparatus according to claim 37, wherein the first AI model is not in the cache of the first communication apparatus; and the transceiver module is further configured to:
query the second communication apparatus for the first AI model; and
receive the first AI model sent by the second communication apparatus.

39. The communication apparatus according to claim 38, wherein the transceiver module is further configured to store the first AI model into the cache of the first communication apparatus.

40. The communication apparatus according to claim 34, wherein the first request is carried in a data radio bearer; and the transceiver module is further configured to:
forward the first request to an application function network element; and
receive the first AI model from a first data processing function network element, and store the first AI model into a cache of the first communication apparatus.

41. The communication apparatus according to any one of claims 34 to 40, wherein the transceiver module is further configured to send a first duration to the terminal, wherein the first duration is a duration in which the terminal waits for the first AI model to start transmission.

42. The communication apparatus according to any one of claims 34 to 41, wherein the transceiver module is further configured to receive update information from the first data processing function network element, wherein the update information is used for updating the first AI model.

43. A communication apparatus, comprising a transceiver module and a processing module, wherein
the transceiver module is configured to: send a first request to a first communication apparatus, wherein the first request comprises an identifier of a first AI model; and receive the first AI model from the first communication apparatus, wherein the first AI model is one of at least one AI model cached by the first communication apparatus or a second communication apparatus, and the second communication apparatus is adjacent to the first communication apparatus.

44. The communication apparatus according to claim 43, wherein the first request is carried in a signaling radio bearer or a data radio bearer.

45. The communication apparatus according to claim 44, wherein after sending the first request to the first communication apparatus, and before receiving the first AI model from the first communication apparatus, the transceiver module is further configured to:
if a waiting duration exceeds a preset duration, or information indicating that the first AI model fails to be deployed is received from the first communication apparatus, send a second request to an application function network element via the first communication apparatus, wherein the second request comprises the identifier of the first AI model, and the second request is carried in the data radio bearer.

46. The communication apparatus according to claim 45, wherein the preset duration is a first duration; and after sending the first request to the first communication apparatus, and before receiving the first AI model from the first communication apparatus, the transceiver module is further configured to:
receive the first duration from the first communication apparatus; and
wait, within the first duration, for the first AI model to start transmission.

47. The communication apparatus according to claim 45, wherein the preset duration is a second duration, and the second duration is a duration of a timer configured by the terminal.

48. A communication apparatus, comprising a transceiver module and a processing module, wherein
the transceiver module is configured to receive first configuration information from a control function network element, wherein the first configuration information comprises an identifier of a first communication apparatus; and receive a first AI model from a first data storage function network element; and
the processing module is configured to send the first AI model to the first communication apparatus based on the identifier of the first communication apparatus.

49. The communication apparatus according to claim 48, wherein the first configuration information further comprises a transmission protocol, the transmission protocol is related to a first data pipeline, and the first data pipeline is a data pipeline between the first data storage function network element and the communication apparatus; and
the transceiver module is further configured to receive the first AI model from the first data storage function network element according to the transmission protocol.

50. The communication apparatus according to claim 48 or 49, wherein the transceiver module is further configured to send the identifier of the first communication apparatus and an identifier of the first AI model to the control function network element.

51. The communication apparatus according to any one of claims 48 to 50, wherein the transceiver module is further configured to:
receive update information from the first data storage function network element, wherein the update information is used for updating the first AI model; and
send the update information to the first communication apparatus.

52. A communication apparatus, comprising a transceiver module, wherein
the transceiver module is configured to receive second configuration information from a control function network element, wherein the second configuration information comprises an identifier of a first data processing function network element and an identifier of a first AI model; and
send the first AI model to the first data processing function network element.

53. The communication apparatus according to claim 52, wherein the second configuration information further comprises a transmission protocol, the transmission protocol is related to a first data pipeline, and the first data pipeline is a data pipeline between the first communication apparatus and the first data processing function network element; and
the transceiver module is further configured to:
that the first AI model is sent to the first data processing function network element comprises:
send the first AI model to the first data processing function network element according to the transmission protocol.

54. The communication apparatus according to claim 52 or 53, wherein the method further comprises:
the transceiver module is further configured to:
receive subscription information from the control function network element, wherein the subscription information comprises the identifier of the first AI model; and
when the local first AI model is updated, send notification information to the control function network element based on the subscription information, wherein the notification information indicates that the first AI model is updated.

55. The communication apparatus according to claim 54, wherein the transceiver module is further configured to send update information to the first data processing function network element, wherein the update information is used for updating the first AI model.

56. A communication apparatus, comprising a transceiver module and a processing module, wherein
the transceiver module is configured to receive a third request from an application function network element or a user plane network element, wherein the third request comprises an identifier of a first AI model;
the processing module is configured to determine a first data storage function network element and a first data processing function network element based on the third request; and
the transceiver module is further configured to send first configuration information to the first data processing function network element and second configuration information to the first data storage function network element, wherein the first configuration information comprises an identifier of a first communication apparatus, and the second configuration information comprises an identifier of the first data processing function network element and the identifier of the first AI model.

57. The communication apparatus according to claim 56, wherein the first configuration information and the second configuration information further comprise a transmission protocol, the transmission protocol is related to a first data pipeline, and the first data pipeline is a data pipeline between the first data storage function network element and the first data processing function network element.

58. The communication apparatus according to claim 56 or 57, wherein a data packet in which the second request is located carries address information of a terminal; and the transceiver module is further configured to query, from the user plane function network element based on the address information of the terminal, an identifier of an access network apparatus corresponding to the terminal, to obtain the identifier of the first communication apparatus.

59. The communication apparatus according to any one of claims 56 to 58, wherein the transceiver module is further configured to:
receive the identifier of the first communication apparatus and the identifier of the first AI model from the first data processing function network element; and
update model cache information based on the identifier of the first communication apparatus and the identifier of the first AI model, wherein the model cache information comprises information about an AI model cached in at least one access network apparatus.

60. The communication apparatus according to claim 59, wherein the transceiver module is further configured to:
send subscription information to the first data storage function network element, wherein the subscription information comprises the identifier of the first AI model;
receive notification information from the first data storage function network element, wherein the notification information indicates that the first AI model is updated; and
configure, based on the model cache information, the first data storage function network element and the first data processing function network element to send update information to the first communication apparatus, wherein the update information is used for updating the first AI model.

61. A communication apparatus, comprising a transceiver module and a processing module, wherein
the transceiver module is configured to receive a third request from an application function network element or a user plane network element, wherein the third request comprises an identifier of a first AI model;
the processing module is configured to determine a first data storage function network element and a first data processing function network element based on the third request; and
the transceiver module is further configured to:
send first configuration information to the first data processing function network element and second configuration information to the first data storage function network element, wherein the first configuration information comprises an identifier of a first communication apparatus, and the second configuration information comprises an identifier of the first data processing function network element and the identifier of the first AI model;
receive the second configuration information from the control function network element, and send the first AI model to the first data processing function network element; and
receive the first configuration information from the control function network element, receive the first AI model from the first data storage function network element, and send the first AI model to the first communication apparatus based on the identifier of the first communication apparatus.
